# EUROPEAN PATENT SPECIFICATION

(11) **EP 1 122 290 B1**
(45) Date of publication and mention of the grant of the patent: **15.12.2004**
(21) Application number: 98967156.5
(22) Date of filing: 06.05.1998
(51) Int. Cl.: C09K 5/00, C23F 11/10

(54) **DILUTE COOLANT**
VERDÜNNTES KÜHLMITTEL
LIQUIDE DE REFROIDISSEMENT DILUE

(43) Date of publication of application: 08.08.2001
(73) Proprietor: Shishiai-Kabushikigaisha, Seki-shi, Gifu 501-3923 (JP)
(72) Inventor: Kawai, Masaru, Gifu-shi, Gifu 501-1113 (JP); Miyake, Yuji, Seki-shi, Gifu 501-3936 (JP); Mori, Yasuaki, Kakamigahara-shi, Gifu 504-0004 (JP)
(74) Representative: Hamilton, Alistair
(86) International application number: PCT/JP1998/002024
(87) International publication number: WO 1999/057218

(56) References cited:
- EP-A- 0 061 823
- JP-A- 1 311 186
- JP-A- 7 070 558
- JP-A- 7 173 651
- JP-A- 7 232 168
- JP-A- 8 311 670
- JP-A- 8 325 761
- JP-A- 59 017 617
- US-A- 3 197 401
- US-A- 4 151 099
- US-A- 4 313 836
- US-A- 4 640 818
- http://www.tgipure.com/systems/di.html; Topway Global, Inc.; Filmtec Membranes; "Comparison of Specific Conductance, Resistance and Concentration of Dissolved Minerals 25 Centigrade"
- http://www.nanomedicine.com/NMI/6.5.5.htm, "Nanomedicines, Volume 1: Basic Capabilities"

## Description

### TECHNICAL FIELD

This invention generally relates to a pre-diluted coolant for direct use in internal-combustion engine systems, which requires no dilution with water. More particularly, this invention relates to a pre-diluted coolant that can excellently inhibit metal corrosion and scale formation in cooling systems and improve lubrication of mechanical seals of water pumps.

### BACKGROUND ART

Conventionally, cooling systems of internal-combustion engines utilize coolants which are prepared by diluting glycol-based or alcohol-based coolant compositions with conventional water. It is known that a conventional cooling system which comprises various metallic parts such as aluminum, aluminum alloy, cast iron, steel, brass, solder and copper parts suffers from metal corrosion, chiefly through contact with water and air contained in the coolant flowing through the cooling system. It is also known that water conventionally used to dilute coolant compositions generally contains, among other substances or hard water elements, ions such as chlorine ions, sulfuric acid ions and bicarbonate ions which are known to be metal corrosive ions. These metal corrosive ions accelerate metal corrosion, especially under high temperature and pressure environments such as in cooling systems.

In order to inhibit metal corrosions in cooling systems, it is conventional to selectively blend in coolant compositions metal corrosion inhibitors such as phosphates, amine salts, silicates, borates, nitrites and dibasic acids.

However, blending of such additives would raise additional problems. Phosphates tend to cause eutrophication in rivers or ponds when coolants containing phosphates are disposed of into rivers or ponds, which would increase BOD and COD in the waters. Increased BOD or COD would propagate algae, which are known to generate harmful red tides or become slimes that are to be accumulated on the riverbeds or pond beds.

Amine salts and nitrites when they coexist in coolants would chemically react with each other and produce nitrosoamine which is known to be a carcinogenic compound, while silicates are generally unstable in coolants and would easily gel when the temperature of the coolants rapidly changes or the pH value of the coolants changes and/or other salts coexist, leading to degradation in metal corrosion inhibition.

Borates are apt to corrode aluminum or aluminum alloy while nitrites will quickly degrade in coolants and lose their expected property in the coolants.

Besides chlorine ions, sulfuric acid ions and bicarbonate ions, hard water element ions such as calcium ions and magnesium ions are often melted in diluting water. Calcium and magnesium ions are known to be scale forming ions. Phosphates or dibasic acids contained in coolant compositions would chemically react with calcium and magnesium ions contained in diluting water and would form scales or precipitation in coolants.

Scales formed as such would seriously affect corrosion inhibition function of phosphoric acids or dibasic acids, might clog circulation passages of cooling systems and/or would lower heat transfer function of coolants at high-temperature sections or spots such as cylinder head portions and valves by adhering thereto and may eventually physically damage such portions as well.

When a coolant composition containing "large" quantity of foregoing metal corrosion inhibitors is used, following. problems would occur. Water or glycol in coolants where those metal corrosion inhibitors are melted would locally evaporate in the vicinities of hot spots such as mechanical seals of water pumps, and locally lower solubility of metal corrosion inhibitors in the coolants, producing precipitation of the metal corrosion inhibitors, which would adhere to the mechanical seals and eventually damage the sealing property of the mechanical seals.

The inventors of the present invention aimed at solving such water-related problems and have arrived at the present invention. Accordingly, it is a chief object of the present invention to provide for a use of a pre-diluted coolant that does not require dilution with water and thus is capable of effectively inhibiting metal corrosions and scale forming as well as improving lubrication of mechanical seals of water pumps altogether without suffering negative aspects of conventional coolant compositions. Other objects of the present invention will become apparent from the descriptions that follow.

### SUMMARY OF THE INVENTION

The present invention is as set out in the accompanying claims.

In particular, the present invention is directed to the use of deionized water free, or ethylene glycol aqueous solution prepared using such deionized water, or propylene glycol aqueous solution prepared using such deionized water in or as the base component in a pre-diluted coolant for direct use in internal-combustion engine systems, wherein said pre-diluted coolant is free of conventional water.

A pre-diluted coolant used in the present invention which does not require later dilution with water can be directly used in the cooling system of an internal-combustion engine. The pre-diluted coolant used in the present invention is characterized in that its chief component is deionized water where metal corrosive ions and scale forming ions are removed, or ethylene glycol aqueous solution prepared using such deionized water, or propylene glycol aqueous solution also prepared using such deionized water.

The term "deionized water" as used herein means water containing practically no metal corrosive ions such as chlorine ions, sulfuric acid ions and bicarbonate ions or scale forming ions such as calcium ions and magnesium ions. Such deionized water may be pure water or its practical equivalent. Such pure water may be aqueous electrolytic solution with specific resistance 10 x 10,000 Ω. cm or over prepared, e.g., by utilizing an ion-exchange resin, or may be nuclear reactor water having specific resistance 100 x 10,000 Ω. cm or over.

Since such deionized water (metal corrosive ions and scale forming ions are removed) is pre-blended in the pre-diluted coolant of the present invention, negative aspects that would otherwise be caused by the ions in the coolant can be effectively avoided. In addition, it has become possible or feasible to substantially reduce contents of conventional metal corrosion inhibitors in coolants since progress of possible metal corrosions in cooling systems would be sufficiently slowed or inhibited by utilization of deionized water without relying much on metal corrosion inhibitors.

Local evaporation of water or glycols in the vicinities of mechanical seals would not seriously or materially affect the physical feature of the seals, because precipitation of metal corrosion inhibitors would effectively be prevented due to their limited use as will be readily appreciated by people skilled in the related art.

Further, as the pre-diluted coolant used in the present invention does not practically contain scale forming ions and contains only minimum amounts of metal corrosion inhibitors, scale formation through chemical reaction between scale forming ions and certain metal corrosion inhibitors such as phosphoric acids and dibasic acids would be effectively inhibited, preventing scale precipitation and accumulation in the coolant.

The pre-diluted coolant used in the present invention selectively contains in an effective amount or amounts at least one metal corrosion inhibitor selected from alkali metal salts and amine salts of phosphoric acids, benzoic acid and alkali metal salts, ammonium salts and amine salts thereof, alkylbenzoic acids having a chemical structure R-C6H4-COOH (R is a C1-C5 alkyl group) and alkali metal salts, ammonium salts and amine salts thereof, alkoxybenzoic acids having a chemical structure RO-C6H4-COOH (R is a C1-C5 alkyl group) and alkali metal salts, ammonium salts and amine salts thereof, cinnamic acids, alkylcinnamic acids and alkoxycinnamic acids having a chemical structure R-C6H4-CH=CHCOOH (R is a C1-C5 alkyl or alkoxyl group) and alkali metal salts, ammonium salts and amine salts thereof, other aromatic carboxylates, C6-C12 aliphatic monobasic acids and C6-C12 aliphatic dibasic acids and their alkali metal salts, ammonium salts and amine salts, other aliphatic carboxylates, aromatic polyvalent carboxylic acids, molybdates, tungstates, vanadates, alkali metal salts of nitric acid, alkali metal salts of silicic acids, alkali metal salts of boric acids, alkali metal salts of nitrous acid, triazole hydrogencarbonate, mercaptobenzothiazole, strontium compounds, 2-phosphonobutane-1,2,4 tricarboxylic acid and alkali metal salts thereof.

### BRIEF DESCRIPTION OF THE DRAWING

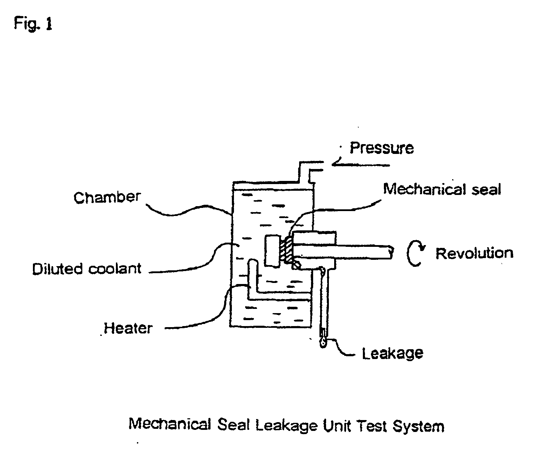

FIG.1 is a schematic view of a mechanical seal leakage unit test system.

### EMBODIMENT/COMPARISON TESTING

A number of test samples were prepared and named Embodiments ("Emb." for short) 1-7 and Comparisons ("Com." for short) 1-7 as provided in Table 1. Ethylene glycol and water were respectively mixed in the indicated weight ratios, where the indicated percentages by weight of the additives were respectively blended. Metal corrosion tests were carried out using these samples in accordance with JIS2234-1994. II (an officially recognized Japanese test standard). Tables II-1 and II-2 show the metal corrosion test results and evaluations. The deionized (good) water used to prepare Embodiments 1-7 was ion-exchange water or distilled water with ion concentrations of chlorine 10mg/litter or lower and sulfuric acid 10mg/litter or lower, with hardness (measured in CaCO3) 20mg/litter or lower.

Bad water (1) was tap water, having ion concentrations of chlorine 49mg/litter and sulfuric acid 38mg/litter with hardness (CaCO3) 89mg/litter. Bad water (2) was ionized water containing sodium sulfate 148mg/litter, sodium chloride 165mg/litter and sodium hydrocarbon 138mg/litter. Bad water (3) was ion exchange water containing calcium chloride 275mg/litter, sodium sulfate 148mg/litter, sodium chloride 165mg/litter and sodium hydrocarbon 138mg/litter.

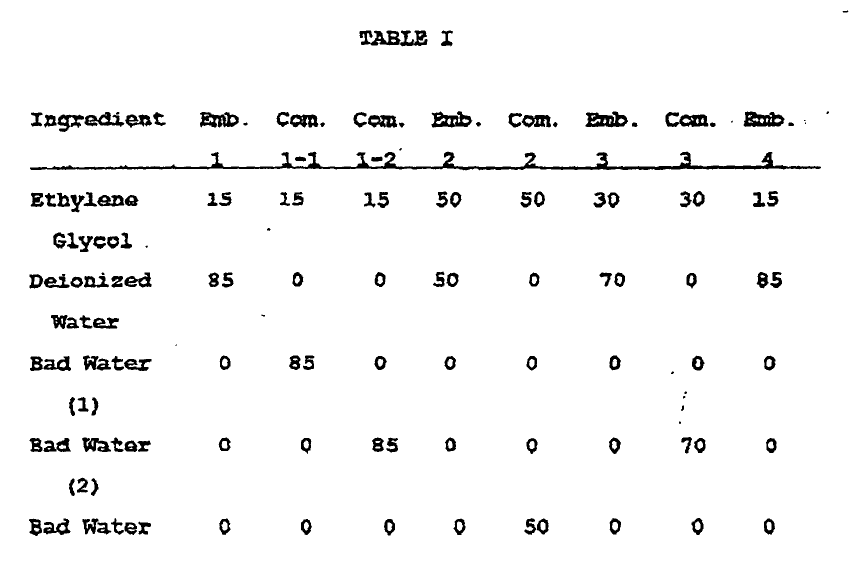

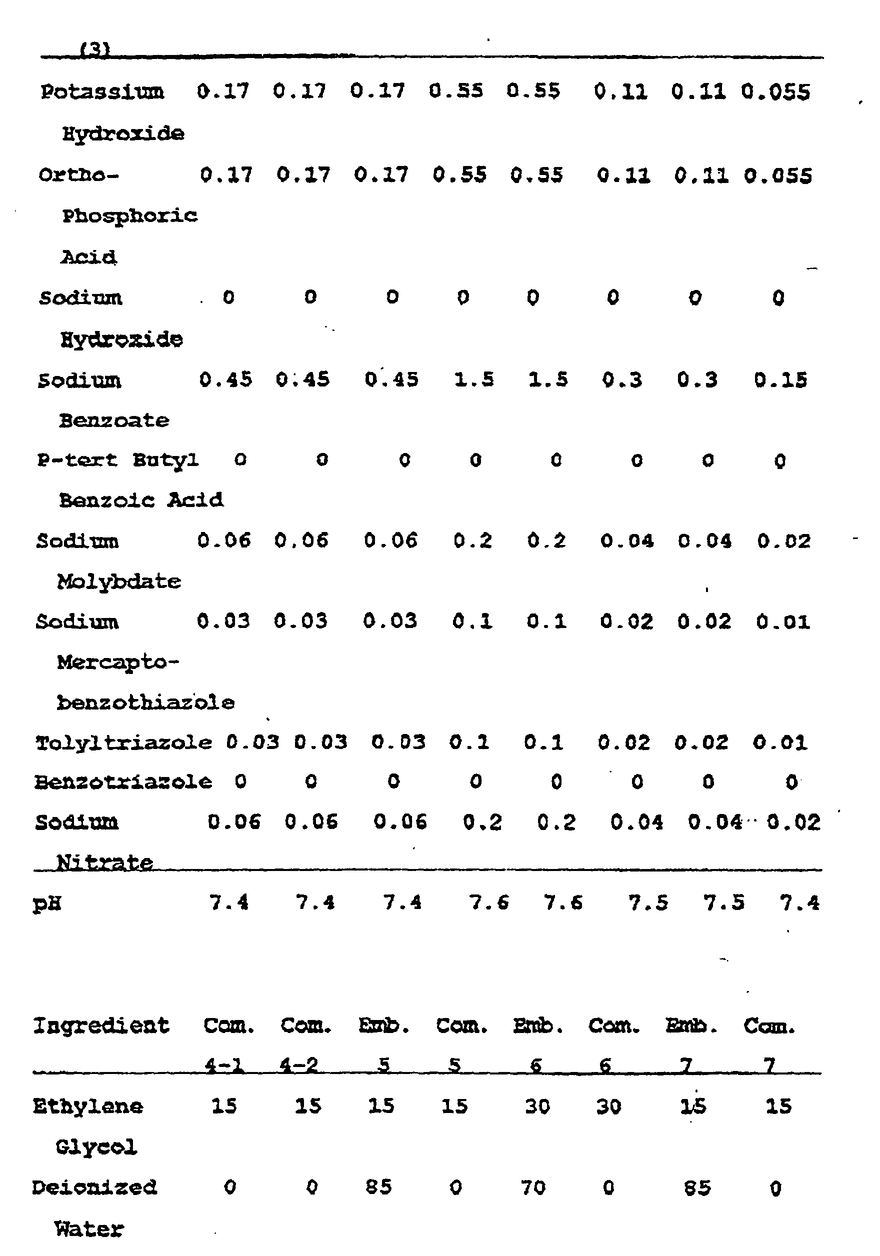

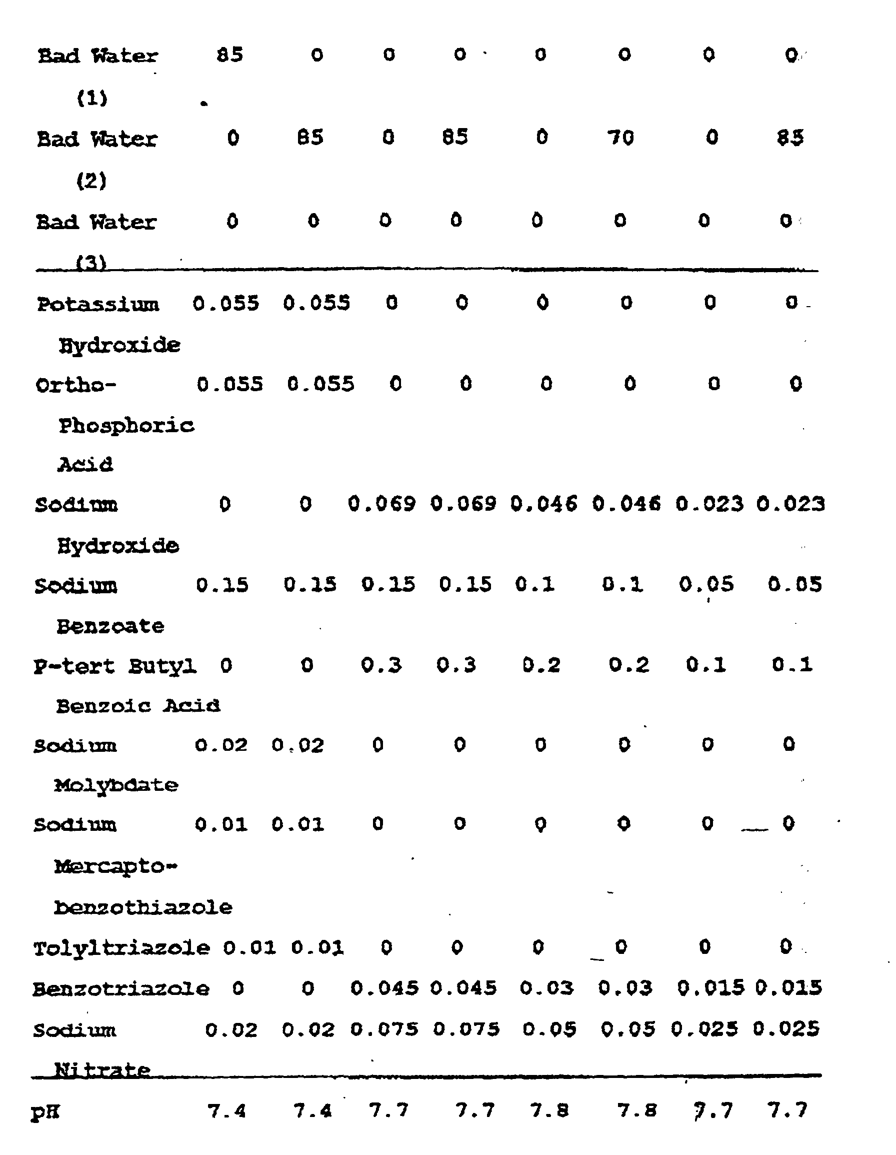

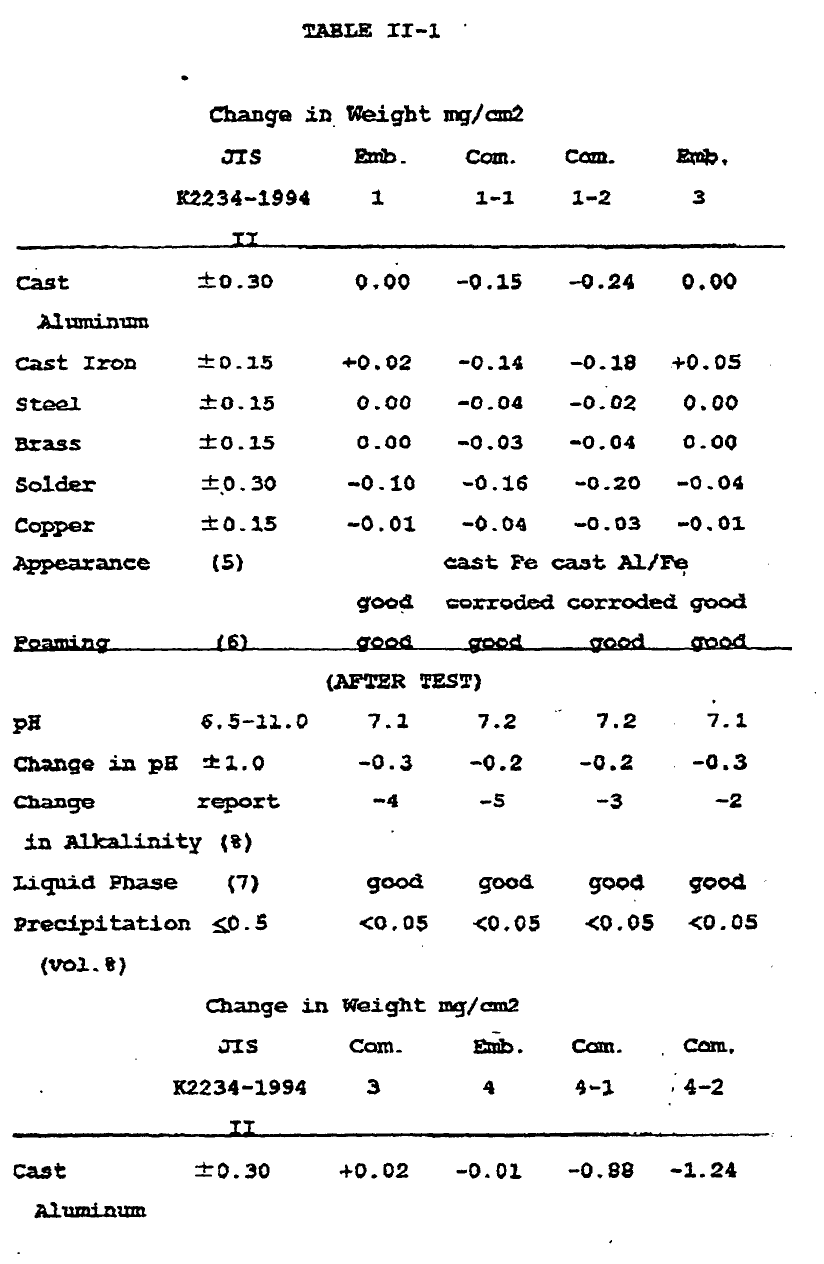

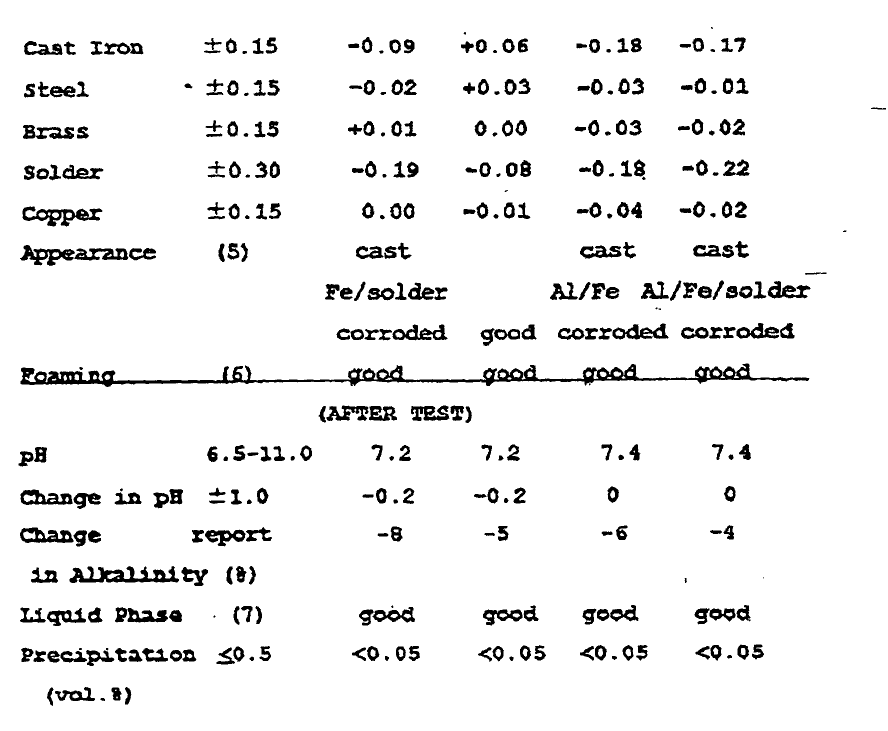

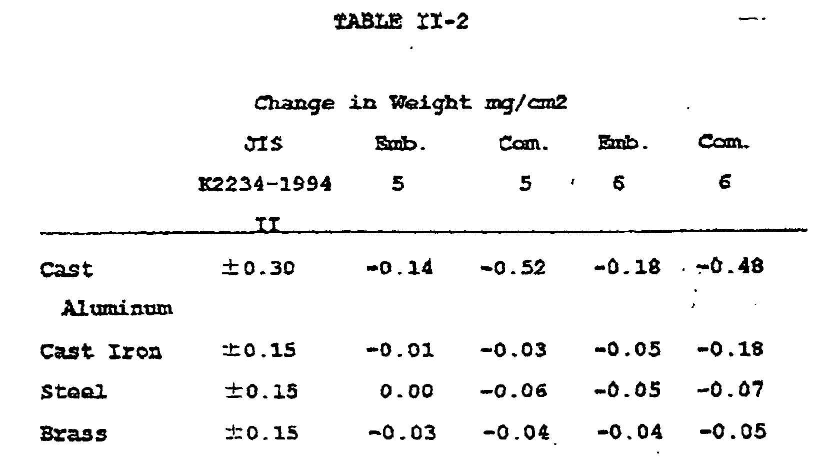

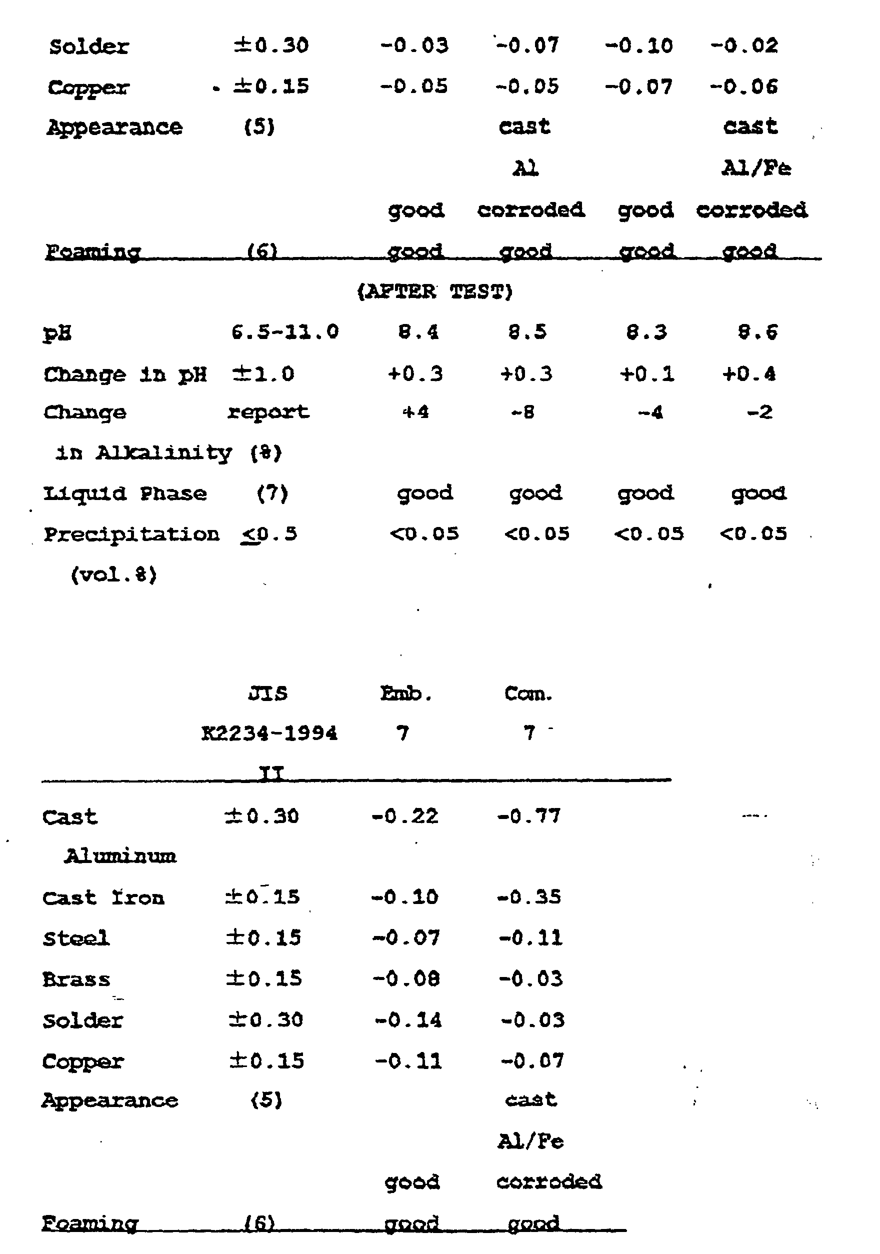

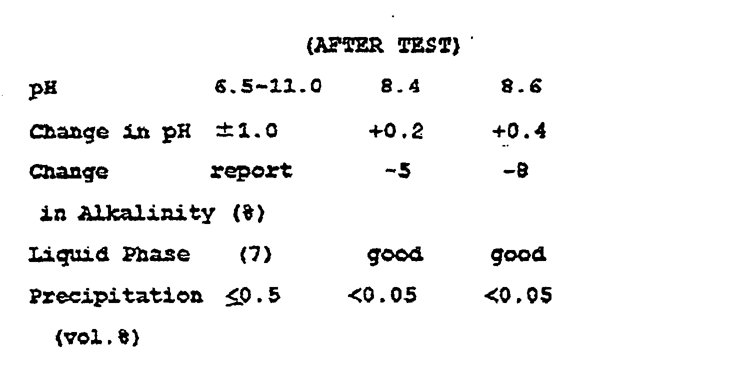

In Tables II-1 and II-2, the numerals (5), (6) and (7) respectively signify the following.

Numeral (5) - There is no showing of corrosion except at the contacting portions between the test sample and spacer. Change in color is not questioned.

Numeral (6) - There is no showing of foam overflow.

Numeral (7) - There is no significant change in color. There is no significant phase separation or gelation.

Embodiment 2 and Comparison 2 were further subjected to both a mechanical seal leakage unit testing and stability testing in hard water. The test conditions are provided in Table III and the test system shown in Fig.1 was utilized. The test results are given in Table IV.

**TABLE III**

| Mechanical Seal Leakage Unit Test Conditions | |
|---|---|
| Concentration v/v% | 50 |
| Time h | 200 |
| Temperature °C | 90 |
| Revolution r.p.m. | 6500 |
| External Pressure kg/cm2 | 1.0 |

The stability test was conducted using 200ml test samples in glass beakers which had been left for 24 hours at room temperatures. The test samples were centrifuged under the JIS K 2503 test conditions (an official Japanese testing standard). Amounts of precipitation were then measured.

**TABLE IV**

| | Embodiment 2 | Comparison 2 |
|---|---|---|
| Leakage ml | <1 | 18 |
| Precipitation v/v% | 0 | 1.2 |

## Claims

1. Use of deionized water free of corrosive ions and scale forming ions and having a specific resistance of at least 10 x 10,000 Ωcm, or ethylene glycol aqueous solution prepared using such deionized water, or propylene glycol aqueous solution prepared using such deionized water in or as the base component in a pre-diluted coolant for direct use in internal-combustion engine systems, wherein said pre-diluted coolant is free of conventional water.

2. Use according to claim 1, wherein said base component contains at least one other ingredient, in an effective amount or amounts, selected from the metal inhibitor group consisting of alkali metal salts and amine salts of phosphoric acids, aromatic carboxylates including benzoic acid and alkali metal salts, ammonium salts and amine salts thereof, alkylbenzoic acids having a chemical structure R-C6H4-COOH (R is a C1-C5 alkyl group) and alkali metal salts, ammonium salts and amine salts thereof, alkoxybenzoic acids having a chemical structure RO-C6H4-COOH (R is a C1-C5 alkyl group) and alkali metal salts, ammonium salts and amine salts thereof, cinnamic acids, alkylcinnamic acids and alkoxycinnamic acids having a chemical structure R-C6H4-CH=CHCOOH (R is a C1-C5 alkyl or alkoxyl group) and alkali metal salts, ammonium salts and amine salts thereof, aliphatic carbokylates including C6-C12 aliphatic monobasic acids and C6-C12 aliphatic dibasic acids and their alkali metal salts, ammonium salts and amine salts, aromatic polyvalent carboxylic acids, molybdates, tungstates, vanadates, alkali metal salts of nitric acid, alkali metal salts of silicic acids, alkali metal salts of boric acids, alkali metal salts of nitrous acid, triazole hydrogencarbonate, mercaptobenzothiazole, strontium compounds, 2-phosphonobutane-1,2,4 tricarboxylic acid and alkali metal salts thereof.

3. Use according to claim 1 or 2, wherein alkali metal salts and amine salts of phosphoric acids, alkali metal salts of silicic acids, alkali metal salts of boric acids, alkali metal salts of nitrous acid, aliphatic monobasic acids and aliphatic dibasic acids are excluded and not contained in said base component, wherein at least one of 0.1-5.0 wt.% of p-tert butyl benzoic acid and alkali metal salts thereof, and at least one of 0.01-1.0 wt.% of triazoles are contained in said base component.

4. Use according to claim I or 2, wherein 0.01-8.0 wt.% of alkylbenzoic acids having a chemical structure R-C6H4-COOH (R is a C1-C5 alkyl group) or their alkali metal salts, ammonium salts or amine salts are contained in said base component.

5. Use according to claim 1 or 2, wherein 0.01-8.0 wt.% of alkoxybenzoic acids having a chemical structure RO-C6H4-COOH (R is a C1-C5 alkyl group) or their alkali metal salts, ammonium salts or amine salts are contained in said base component.

6. Use according to claim 1 or 2, wherein 0.01-8.0 wt.% of cinnamic acids, alkylcinnamic acids or alkoxycinnamic acids having a chemical structure R-C6H4-CH=CHCOOH (R is H, or a C1-C5 alkyl or alkoxyl group), or their alkali metal salts, ammonium salts or amine salts are contained in said base component.

7. Use according to claim 1 or 2, wherein alkali metal salts and amine salts of phosphoric acids, alkali metal salts of silicic acids, alkali metal salts of boric acids and alkali metal salts of nitrous acid are excluded and not contained in said base component, wherein 0.1-4.0 wt.% of at least one of sebacic acid and alkali metal salts thereof, and 0.1-3.0 wt.% of at least one of p-tert butylbenzoic acids and alkali metal salts thereof are contained in said base component.

8. Use according to claim 1 or 2, wherein phosphates, amine salts, silicates, borates and nitrites are excluded and not contained in said base component, wherein 0.1-0.4 wt.% of at least one of sebacic acid and alkali metal salts thereof, 0.1-3.0 wt.% ofat least one of undecanoic diacid and dodecanoic diacid and their alkali metal salts, and 0.01-1.0 wt.% of at least one of triazoles are contained in said base component.

9. Use according to claim 1 or 2, wherein 0.02-5.0 wt.% ofat least one of C6-C12 aliphatic monobasic acids and their salts, and 0.02-5.0 wt.% of at least one of alkoxybenzoic acids having a C1-C5 alkoxyl group and their salts are contained in said base component.

10. Use according to claim 9, further containing 0.1-1.0 wt.% of at least one of triazoles.

11. Use according to claim 9 or 10, wherein amine salts and borates are excluded and not contained.

12. Use according to claim 1 or 2, wherein 0.02-5.0 wt.% of at least one of hexanoic acid and heptanoic acid and their salts, and 0.02-5.0 wt.% of at least one of alkylbenzoic acids having a C1-C5 group and salts thereof are contained in said base component.

13. Use according to claim 12, further containing 0.01-1.0 wt.% of at least one of triazoles.

14. Use according to claim 12 or 13, wherein amine salts and borates are excluded and not contained.

15. Use according to claim 1 or 2, wherein 0.02-5.0 wt.% of at least one of C6-C12 aliphatic monobasic acids and salts thereof, and 0.02-5.0 wt.% of at least one of cinnamic acids, alkylcinnamic acids and alkoxycinnamic acids having a chemical structure R-C6H4-CH=CHCOOH (R is a C1-C5 alkyl group or alkoxyl group) and their alkali metal salts, ammonium salts and amine salts are contained in said base component.

16. Use according to claim 15, further containing 0.01-1.0 wt.% of at least one of triazoles.

17. Use according to claim 15 or 16, wherein amine salts and borates are excluded and not contained.

18. Use according to claim 1 or 2, wherein 0.01-8.0 wt.% of at least one of p-toluic acid salts and 0.002-1.0 wt.% of at least one of molybdates are contained in said base component.

19. Use according to claim 18, further containing 0.01-8.0 wt.% of at least one of benzoates.

20. Use according to claim 18, further containing 0.01-8.0 wt.% of p-tert butylbenzoic acid.

21. Use according to any of claims 18-20, wherein nitrites are excluded and not contained.

22. Use according to claim 1 or 2, wherein 0.01-8.0 wt.% of at least one ofbenzoates, 0.01-8.0 wt.% of p-tert butylbenzoic acid and 0.002-1.0 wt.% of at least one of molybdates are contained in said base component.

23. Use according to claim 22, further containing 0.01-8.0 wt.% of at least one of p-toluic acid salts.

24. Use according to claim 22 or 23, wherein nitrites are excluded and not contained.

25. Use according to claim 1 or 2, wherein 0.01-8.0 wt.% of at least one of benzoates and 0.01-8.0 wt.% of at least one of p-toluic acid salts are contained in said base component.

26. Use according to claim 25, further containing 0.01-8.0 wt.% of p-tert butylbenzoic acid.

27. Use according to claim 25 or 26, wherein nitrites are excluded and not contained.

28. Use according to claim 1 or 2, wherein 0.00002-0.1 wt.% of at least one of strontium compounds is contained in said base component.

29. Use according to claim 1 or 2, containing in said pre-diluted coolant 0.01-3.0 wt.% of at least one of phosphoric acids and salts thereof, 0.001-0.5 wt.% of at least one of momolybdic acid, tungstic acid and vanadic acid and their salts, and 0.001-0.5 wt.% of at least one of triazoles and salts thereof.

30. Use according to claim 1 or 2, wherein 0.002-1.0 wt.% of at least one of 2-phosphonobutane=1,2,4 tricarboxylic acids and aqueous solutions thereof, at least one of phosphates, at least one of nitrates, at least one of benzoates and at least one of triazoles are contained in said base component.

31. Use according to claim 30, wherein 0.002-2.0 wt.% of at least one of phosphates, 0.002-1.0 wt.% of at least one of nitrates, 0.02-6.0 wt.% of at least one of benzoates, and 0.01-2.0 wt.% of at least one of triazoles are contained in said base component.

## Patentansprüche

1. Verwendung von entionisierten Wasser, das frei von korrodierenden Ionen und kesselsteinbildenden Ionen ist und einen spezifischen Widerstand von mindestens 10 x 10000 Ωcm aufweist, oder einer wässerigen Ethylenglykollösung, die unter Verwendung eines solchen entionisierten Wassers hergestellt wird, oder einer wässerigen Propylenglykollösung, die unter Verwendung eines solchen entionisierten Wassers hergestellt wird, in der oder als die Grundkomponente in einem vorverdünntes Kühlmittel zur direkten Verwendung in Verbrennungsmotorenanlagen, wobei das vorverdünnte Kühlmittel frei von herkömmlichem Wasser ist.

2. Verwendung nach Anspruch 1, wobei die Grundkomponente mindestens einen anderen Bestandteil in einer wirksamen Menge oder Mengen enthält, der aus der Metallinhibitorgruppe ausgewählt ist, die besteht aus: Alkalimetallsalzen und Aminsalzen von Phosphorsäuren, aromatischen Carboxylaten einschließlich Benzoesäure und deren Alkalimetallsalzen, Ammoniumsalzen und Aminsalzen; Alkylbenzoesäuren mit einer chemischen Struktur R-C6H4-COOH (R ist eine C1-C5-Alkylgruppe) und deren Alkalimetallsalzen, Ammoniumsalzen und Aminsalzen; Alkoxybenzoesäuren mit einer chemischen Struktur RO-C6H4-COOH (R ist eine C1-C5-Alkylgruppe) und deren Alkalimetallsalzen, Ammoniumsalzen und Aminsalzen, Zimtsäuren, Alkylzimtsäuren und Alkoxyzimtsäuren mit einer chemischen Struktur R-C6H4-CH=CHCOOH (R ist eine C1- C5-Alkyl- oder Alkoxylgruppe) und deren Alkalimetallsalzen, Ammoniumsalzen und Aminsalzen, aliphatischen Carboxylaten einschließlich aliphatischen einbasigen C6-C12- Säuren und aliphatischen zweibasigen C6-C12-Säuren und ihren Alkalimetallsalzen, Ammoniumsalzen und Aminsalzen, aromatischen mehrwertigen Karbonsäuren, Molybdaten, Wolframaten, Vanadinaten, Alkalimetallsalzen von Salpetersäure, Alkalimetallsalzen von Kieselsäuren, Alkalimetallsalzen von Borsäuren, Alkalimetallsalzen von salpetriger Säure, Triazolhydrogencarbonat, Mercaptobenzothiazol, Strontiumverbindungen, 2-phosphonobutan=1,2,4 Tricarbonsäure und deren Alkalimetallsalzen.

3. Verwendung nach Anspruch 1 oder 2, wobei Alkalimetallsalze und Aminsalze von Phosphorsäuren, Alkalimetallsalze von Kieselsäuren, Alkalimetallsalze von Borsäuren, Alkalimetallsalze von salpetriger Säure, aliphatische einbasige Säuren und aliphatische zweibasige Säuren ausgeschlossen und nicht in der Grundkomponente enthalten sind, wobei 0,1-5,0 Gew.% mindestens einer der p-tert-Butylbenzoesäure und deren Alkalimetallsalzen; und 0,01-1,0 Gew.% mindestens eines der Triazole in der Grundkomponente enthalten sind.

4. Verwendung nach Anspruch 1 oder 2, wobei 0,01-8,0 Gew.% Alkylbenzoesäuren mit einer chemischen Struktur R-C6H4-COOH (R ist eine C1-C5-Alkylgruppe) oder ihrer Alkalimetallsalze, Ammoniumsalze oder Aminsalze in der Grundkomponente enthalten sind.

5. Verwendung nach Anspruch 1 oder 2, wobei 0,01-8,0 Gew.% Alkoxybenzoesäuren mit einer chemischen Struktur RO-C6H4-COOH (R ist eine C1-C5-Alkylgruppe) oder ihrer Alkalimetallsalze, Ammoniumsalze oder Aminsalze in der Grundkomponente enthalten sind.

6. Verwendung nach Anspruch 1 oder 2, wobei 0,01-8,0 Gew.% Zimtsäuren, Alkylzimtsäuren oder Alkoxyzimtsäuren mit einer chemischen Struktur R-C6H4-CH=CHCOOH (R ist H oder eine C1-C5-Alkyl- oder Alkoxylgruppe), oder ihrer Alkalimetallsalze, Ammoniumsalze oder Aminsalze in der Grundkomponente enthalten sind.

7. Verwendung nach Anspruch 1 oder 2, wobei Alkalimetallsalze und Aminsalze von Phosphorsäuren, Alkalimetallsalze von Kieselsäuren, Alkalimetallsalze von Borsäuren und Alkalimetallsalze von salpetriger Säure ausgeschlossen und nicht in der Grundkomponente enthalten sind, wobei 0,1-4,0 Gew.% mindestens einer der Sebacinsäure und deren Alkalimetallsalze; und 0,1-3,0 Gew.% mindestens einer der p-tert-Butylbenzoesäuren und deren Alkalimetallsalze in der Grundkomponente enthalten sind.

8. Verwendung nach Anspruch 1 oder 2, wobei Phosphate, Aminsalze, Silikate, Borate und Nitrite ausgeschlossen und nicht in der Grundkomponente enthalten sind, wobei 0,1- 0,4 Gew.% mindestens einer der Sebacinsäure und deren Alkalimetallsalze; 0,1-3,0 Gew.% mindestens einer der zweibasigen Undecansäure und der zweibasigen Dodecansäure und deren Alkalimetallsalze, und 0,01-1,0 Gew.% mindestens eines der Triazole in der Grundkomponente enthalten sind.

9. Verwendung nach Anspruch 1 oder 2, wobei 0,02-5,0 Gew.% mindestens einer der aliphatischen einbasigen C6-C12-Säuren und ihrer Salze, und 0,02-5,0 Gew.% mindestens einer der Alkoxybenzoesäuren mit einer C1-C5 Alkoxylgruppe, und ihrer Salze in der Grundkomponente enthalten sind.

10. Verwendung nach Anspruch 9, die ferner 0,1-1,0 Gew.% mindestens eines der Triazole enthält.

11. Verwendung nach Anspruch 9 oder 10, wobei Aminsalze und Borate ausgeschlossen und nicht enthalten sind.

12. Verwendung nach Anspruch 1 oder 2, wobei 0,02-5,0 Gew.% mindestens einer der Hexansäure und Heptansäure und ihrer Salze, und 0,02-5,0 Gew.% mindestens einer der Alkylbenzoesäuren mit einer C1-C5-Gruppe, und deren Salze in der Grundkomponente enthalten sind.

13. Verwendung nach Anspruch 12, die ferner 0,01-1,0 Gew.% mindestens eines der Triazole enthält.

14. Verwendung nach Anspruch 12 oder 13, wobei Aminsalze und Borate ausgeschlossen und nicht enthalten sind.

15. Verwendung nach Anspruch 1 oder 2, wobei 0,02-5,0 Gew.% mindestens einer der aliphatischen einbasigen C6-C12-Säuren und deren Salze, und 0,02-5,0 Gew.% mindestens einer der Zimtsäuren, Alkylzimtsäuren und Alkoxyzimtsäuren mit einer chemischen Struktur R-C6H4-CH=CHCOOH (R ist eine C1- C5-Alkylgruppe oder Alkoxylgruppe), und ihrer Alkalimetallsalze, Ammoniumsalze und Aminsalze in der Grundkomponente enthalten sind.

16. Verwendung nach Anspruch 15, die ferner 0,01-1,0 Gew.% mindestens eines der Triazole enthält.

17. Verwendung nach Anspruch 15 oder 16, wobei Aminsalze und Borate ausgeschlossen und nicht enthalten sind.

18. Verwendung nach Anspruch 1 oder 2, wobei 0,01-8,0 Gew.% mindestens eines der p-Toluylsäuresalze und 0,002-1,0 Gew.% mindestens eines der Molybdate in der Grundkomponente enthalten sind.

19. Verwendung nach Anspruch 18, die ferner 0,01-8,0 Gew.% mindestens eines der Benzoate enthält.

20. Verwendung nach Anspruch 18, die ferner 0,01-8,0 Gew.% p-tert-Butylbenzoesäure enthält.

21. Verwendung nach einem der Ansprüche 18-20, wobei Nitrite ausgeschlossen und nicht enthalten sind.

22. Verwendung nach Anspruch 1 oder 2, wobei 0,01-8,0 Gew.% mindestens eines der Benzoate, 0,01-8,0 Gew.% p-tert-Butylbenzoesäure und 0,002-1,0 Gew.% mindestens eines der Molybdate in der Grundkomponente enthalten sind.

23. Verwendung nach Anspruch 22, die ferner 0,01-8,0 Gew.% mindestens eines der p-Toluylsäuresalze enthält.

24. Verwendung nach Anspruch 22 oder 23, wobei Nitrite ausgeschlossen und nicht enthalten sind.

25. Verwendung nach Anspruch 1 oder 2, wobei 0,01-8,0 Gew.% mindestens eines der Benzoate und 0,01-8,0 Gew.% mindestens eines der p-Toluylsäuresalze in der Grundkomponente enthalten sind.

26. Verwendung nach Anspruch 25, die ferner 0,01-8,0 Gew.% p-tert-Butylbenzoesäure enthält.

27. Verwendung nach Anspruch 25 oder 26, wobei Nitrite ausgeschlossen und nicht enthalten sind.

28. Verwendung nach Anspruch 1 oder 2, wobei 0,00002-0,1 Gew.% mindestens einer der Strontiumverbindungen in der Grundkomponente enthalten sind.

29. Verwendung nach Anspruch 1 oder 2, die in dem vorverdünnten Kühlmittel 0,01-3,0 Gew.% mindestens eine der Phosphorsäuren und deren Salze; 0,001-0,5 Gew.% mindestens eine der Molybdänsäure, Wolframsäure und Vanadinsäure und ihrer Salze und 0,001-0,5 Gew.% mindestens eines der Triazole und deren Salze enthält.

30. Verwendung nach Anspruch 1 oder 2, wobei 0,002-1,0 Gew.% mindestens einer der 2-phosphonobutan=1,2,4 Tricarbonsäuren und deren wässerigen Lösungen; mindestens eines der Phosphate, mindestens eines der Nitrate, mindestens eines der Benzoate und mindestens eines der Triazole in der Grundkomponente enthalten sind.

31. Verwendung nach Anspruch 30, wobei 0,002-2,0 Gew.% mindestens eines der Phosphate, 0,002-1,0 Gew.% mindestens eines der Nitrate, 0,02-6,0 Gew.% mindestens eines der Benzoate und 0,01-2,0 Gew.% mindestens eines der Triazole in der Grundkomponente enthalten sind.

## Revendications

1. Utilisation d'eau déminéralisée exempte d'ions corrosifs et d'ions incrustants et ayant une résistance spécifique d'au moins 10 x 10000 Ωcm, ou solution aqueuse d'éthylène glycol préparée en utilisant une telle eau déminéralisée, ou une solution aqueuse de propylène glycol préparée en utilisant une telle eau déminéralisée dans un ou comme un composant de base dans un liquide de refroidissement préalablement dilué pour une utilisation directe dans des systèmes de moteur à combustion interne, où ledit liquide de refroidissement préalablement dilué est exempt d'eau conventionnelle.

2. Utilisation selon la revendication 1, dans laquelle ledit composant de base contient au moins un autre ingrédient, en une ou des quantités efficaces, sélectionné dans le groupe des inhibiteurs de métaux constitué de sels de métaux alcalins et de sels d'amines d'acides phosphoriques, de carboxylates aromatiques comprenant l'acide benzoïque et des sels de métaux alcalins, des sels d'ammonium et des sels d'amines de ceux-ci, d'acides alkylbenzoïques ayant une structure chimique en R-C6H4-COOH (R est un groupe alkyle en C1-C5) et des sels de métaux alcalins, des sels d'ammonium et des sels d'amines de ceux-ci, d'acides alcoxybenzoïques ayant une structure chimique en RO-C6H4-COOH (R est un groupe alkyle en C1-C5) et des sels de métaux alcalins, des sels d'ammonium et des sels d'amines de ceux-ci, d'acides cinnamiques, d'acides alkylcinnamiques et d'acides alcoxycinnamiques ayant une structure chimique en R-C6H4-CH=CHCOOH (R est un groupe alkyle ou alcoxy en C1-C5) et des sels de métaux alcalins, des sels d'ammonium et des sels d'amines de ceux-ci, de carboxylates aliphatiques comprenant des acides monobasiques aliphatiques en C6-C12 et des acides dibasiques aliphatiques en C6-C12 et de leurs sels de métaux alcalins, sels d'ammonium et sels d'amines, d'acides carboxyliques polyvalents aromatiques, de molybdates, de tungstates, de vanadates, des sels de métaux alcalins d'acide nitrique, des sels de métaux alcalins d'acides siliciques, des sels de métaux alcalins d'acides boriques, des sels de métaux alcalins d'acide nitreux, d'hydrogénocarbonate de triazole, de mercaptobenzothiazole, de composés de strontium, de 2-phosphonobutane-1,2,4-acide tricarboxylique et des sels de métaux alcalins de celui-ci.

3. Utilisation selon la revendication 1 ou 2, dans laquelle les sels de métaux alcalins et les sels d'amines d'acides phosphoriques, les sels de métaux alcalins d'acides siliciques, les sels de métaux alcalins d'acides boriques, les sels de métaux alcalins d'acide nitreux, les acides monobasiques aliphatiques et les acides dibasiques aliphatiques sont exclus et ne sont pas contenus dans ledit composant de base, dans laquelle au moins un parmi l'acide p-tert butyle benzoïque à 0,1-5,0 % en poids et les sels de métaux alcalins de celui-ci, et au moins un parmi les triazoles à 0,01-1,0 % en poids sont contenus dans ledit composant de base.

4. Utilisation selon la revendication 1 ou 2, dans laquelle 0,01-8,0 % en poids d'acides alkylbenzoïques ayant une structure chimique en R-C6H4-COOH (R est un groupe alkyle en C1-C5) ou de leurs sels de métaux alcalins, sels d'ammonium ou sels d'amines sont contenus dans ledit composant de base.

5. Utilisation selon la revendication 1 ou 2, dans laquelle 0,01-8,0 % en poids d'acides alcoxybenzoïques ayant une structure chimique en RO-C6H4-COOH (R est un groupe alkyle en C1-C5) ou de leurs sels de métaux alcalins, sels d'ammonium ou sels d'amines sont contenus dans ledit composant de base.

6. Utilisation selon la revendication 1 ou 2, dans laquelle 0,01-8,0 % en poids d'acides cinnamiques, d'acides alkylcinnamiques ou d'acides alcoxycinnamiques ayant une structure chimique en R-C6H4-CH=CHCOOH (R est H, ou un groupe alkyle ou alcoxyle en C1-C5) ou de leurs sels de métaux alcalins, sels d'ammonium ou sels d'amines sont contenus dans ledit composant de base.

7. Utilisation selon la revendication 1 ou 2, dans laquelle des sels de métaux alcalins et des sels d'amines d'acides phosphoriques, des sels de métaux alcalins d'acides siliciques, des sels de métaux alcalins d'acides boriques et des sels de métaux alcalins d'acide nitreux sont exclus et ne sont pas contenus dans ledit composant de base, dans laquelle 0,1-4,0 % en poids d'au moins un parmi l'acide sébacique et les sels de métaux alcalins de celui-ci, et 0,1-3,0 % en poids d'au moins un parmi les acides p-tert butylbenzoïques et les sels de métaux alcalins de ceux-ci sont contenus dans ledit composant de base.

8. Utilisation selon la revendication 1 ou 2, dans laquelle les phosphates, les sels d'amines, les silicates, les borates et les nitrites sont exclus et ne sont pas contenus dans ledit composant de base, dans laquelle 0,1-0,4 % en poids d'au moins un parmi l'acide sébacique et les sels de métaux alcalins de celui-ci, 0,1-3,0 % en poids d'au moins un parmi le diacide undécanoïque et le diacide dodécanoïque et leurs sels de métaux alcalins, et 0,01-1,0 % en poids d'au moins un parmi les triazoles sont contenus dans ledit composant de base.

9. Utilisation selon la revendication 1 ou 2, dans laquelle 0,02-5,0 % en poids d'au moins un parmi les acides monobasiques aliphatiques en C6-C12 et leurs sels, et 0,02-5,0 % en poids d'au moins un parmi les acides alcoxybenzoïques ayant un groupe alcoxyle en C1-C5 et leurs sels sont contenus dans ledit composant de base.

10. Utilisation selon la revendication 9, contenant en outre 0,1-1,0 % en poids d'au moins un parmi les triazoles.

11. Utilisation selon la revendication 9 ou 10, dans laquelle les sels d'amines et les borates sont exclus et ne sont pas présents.

12. Utilisation selon la revendication 1 ou 2, dans laquelle 0,02-5,0 % en poids d'au moins un parmi l'acide hexanoïque et l'acide heptanoïque et leurs sels, et 0,02-5,0 % en poids d'au moins un parmi les acides alkylbenzoïques ayant un groupe en C1-C5 et les sels de ceux-ci sont contenus dans ledit composant de base.

13. Utilisation selon la revendication 12, contenant en outre 0,01-1,0 % en poids d'au moins un parmi les triazoles.

14. Utilisation selon la revendication 12 ou 13, dans laquelle les sels d'amines et les borates sont exclus et ne sont pas présents.

15. Utilisation selon la revendication 1 ou 2, dans laquelle 0,02-5,0 % en poids d'au moins un parmi les acides monobasiques aliphatiques en C6-C12 et leurs sels, et 0,02-5,0 % en poids d'au moins un parmi les acides cinnamiques, les acides alkylcinnamiques et les acides alcoxycinnamiques ayant une structure chimique en R-C6H4-CH=CHCOOH (R est un groupe alkyle ou alcoxy en C1-C5) et leurs sels de métaux alcalins, sels d'ammonium et sels d'amines sont contenus dans ledit composant de base.

16. Utilisation selon la revendication 15, contenant en outre 0,01-1,0 % en poids d'au moins un parmi les triazoles.

17. Utilisation selon la revendication 15 ou 16, dans laquelle les sels d'amines et les borates sont exclus et ne sont pas présents.

18. Utilisation selon la revendication 1 ou 2, dans laquelle 0,01-8,0 % en poids d'au moins un parmi les sels d'acide p-toluique et 0,002-1,0 % en poids d'au moins un parmi les molybdates sont contenus dans ledit composant de base.

19. Utilisation selon la revendication 18, contenant en outre 0,01-8,0 % en poids d'au moins un parmi les benzoates.

20. Utilisation selon la revendication 18, contenant en outre 0,01-8,0 % en poids d'acide p-tert butylbenzoïque.

21. Utilisation selon l'une quelconque des revendications 18-20, dans laquelle les nitrites sont exclus et ne sont pas présents.

22. Utilisation selon la revendication 1 ou 2, dans laquelle 0,01-8,0 % en poids d'au moins un parmi les benzoates, 0,01-8,0 % en poids d'acide p-tert butylbenzoïque et 0,002-1,0 % en poids d'au moins un parmi les molybdates sont contenus dans ledit composant de base.

23. Utilisation selon la revendication 22, contenant en outre 0,01-8,0 % en poids d'au moins un parmi les sels d'acide p-toluique.

24. Utilisation selon la revendication 22 ou 23, dans laquelle les nitrites sont exclus et ne sont pas présents.

25. Utilisation selon la revendication 1 ou 2, dans laquelle 0,01-8,0 % en poids d'au moins un parmi les benzoates et 0,01-8,0 % en poids d'au moins un parmi les sels d'acide p-toluique sont contenus dans ledit composant de base.

26. Utilisation selon la revendication 25, contenant en outre 0,01-8,0 % en poids d'acide p-tert butylbenzoïque.

27. Utilisation selon la revendication 25 ou 26, dans laquelle les nitrites sont exclus et ne sont pas présents.

28. Utilisation selon la revendication 1 ou 2, dans laquelle 0,00002-0,1 % en poids d'au moins un parmi les composés de strontium est contenu dans ledit composé de base.

29. Utilisation selon la revendication 1 ou 2, contenant dans ledit fluide de refroidissement préalablement dilué 0,01-3,0 % en poids d'au moins un parmi les acides phosphoriques et les sels de ceux-ci, 0,001-0,5 % en poids d'au moins un parmi l'acide molybdique, l'acide tungstique et l'acide vanadique et leurs sels, et 0,001-0,5 % en poids d'au moins un parmi les triazoles et les sels de ceux-ci.

30. Utilisation selon la revendication 1 ou 2, dans laquelle 0,002-1,0 % en poids d'au moins un parmi les acides 2-phosphonobutane=1,2,4-tricarboxyliques et les solutions aqueuses de ceux-ci, au moins un parmi les phosphates, au moins un parmi les nitrates, au moins un parmi les benzoates et au moins un parmi les triazoles sont contenus dans ledit composant de base.

31. Utilisation selon la revendication 30, dans laquelle 0,002-2,0 % en poids d'au moins un parmi les phosphates, 0,002-1,0 % en poids d'au moins un parmi les nitrates, 0,02-6,0 % en poids d'au moins un parmi les benzoates, et 0,01-2,0 % en poids d'au moins un parmi les triazoles sont contenus dans ledit composant de base.
